# EUROPEAN PATENT APPLICATION

(11) **EP 4 793 205 A1**
(43) Date of publication of application: **19.08.2026**
(21) Application number: 25158371.2
(22) Date of filing: 17.02.2025
(51) Int. Cl.: B65G 1/04, B65G 1/06, B65G 1/137, B65G 61/00, B65G 65/00

(54) **MOBILE SYSTEM FOR INSERTING A STORAGE BIN INTO AN AUTOMATED STORAGE AND RETRIEVAL SYSTEM**

(71) Applicant: AutoStore Technology AS, 5578 Nedre Vats (NO)
(72) Inventor: Håland, Christian, 5578 Nedre Vats (NO)
(74) Representative: Kilburn & Strode LLP

(57) **Abstract**

The disclosure relates to a mobile system for inserting a storage bin into an automated storage and retrieval system, the mobile system comprising a mobile platform; a storage bin input stage; a storage bin output stage; and a robotic arm for transferring a storage bin from the storage bin input stage to the storage bin output stage. At least one of the storage bin input stage, storage bin output stage and robotic arm is on the mobile platform.

## Description

### TECHNICAL FIELD

The disclosure relates to a bin insert system. More particularly, it relates to a mobile system for inserting a storage bin into an automated storage and retrieval system, an automated storage and retrieval system comprising the mobile system, and a method of using the automated storage and retrieval system.

### BACKGROUND

Traditional storage solutions usually involve the arrangement of goods on rows of shelves within a warehouse. The shelf location for each item is recorded in an inventory, and goods are retrieved from the shelves by a stock picker. The shelves are restocked and the inventory updated, as needed, as goods enter and leave the warehouse.

Warehouse workers may be assisted by robotic pickers and by automated inventory management systems. Automated transit systems may also be implemented in traditional warehouse set-ups to move goods from their inventory location to a picking and/or packing station.

An alternative to a traditional warehouse set-up is an automated storage and retrieval system in which robots retrieve items from their logged location within the warehouse and deliver the items to a packing station or port. Such systems can reduce or eliminate the space needed to pass between rows of shelves to access stock, thereby removing the need for broad aisles within the warehouse. One example of such a system involves placing goods in storage bins (also known as storage containers) that are configured to be stacked, side by side, within a three-dimensional grid. A rail system is arranged on top of the grid, along which robotic bin-handling vehicles configured to lift bins from the grid can travel. The bin-handling vehicles are configured to transport bins from the grid and to deliver them to ports or stations at the periphery of the grid so that the goods within the bin can be picked and packed.

An automated storage and retrieval system often comprises several thousand storage bins. When initially constructed at a location, these several thousand storage bins must be inserted into the storage system *en masse.* Likewise, if an existing storage system is expanded, many additional bins will need to be inserted into the system in a large operation. Such mass insertion of storage bins is difficult and time consuming. Conventionally, each storage bin is manually inserted through port columns of the automated storage and retrieval system, from which they are picked up by the bin handling vehicles and transported to their storage locations within the framework structure. The storage bins are inserted manually one by one into the framework structure via the dedicated access stations. Before insertion, the storage bins are preferably labelled, scanned and tested to ensure that the dimensions of the bins are within certain tolerances.

Since manual bin insertion requires a substantial amount of time, the access stations being used for bin insertion will be occupied and cannot be used for their intended purpose. Hence, there is a need for an improved insertion solution that is less cumbersome for inserting storage bins and reduces time taken occupying the access stations such that are free to perform their regular operations and a storage system can be set up more quickly.

One or more aspects of the invention of the present application are set out in the claims.

### BRIEF DESCRIPTION OF THE DRAWINGS

The disclosure will now be described in more detail in connection with a number of examples shown in the accompanying drawings, in which:
Fig. 1 shows a perspective view of a storage system comprising a grid and a plurality of robotic bin-handling vehicles configured to retrieve and/or rearrange goods stored within the grid;
Fig. 2 shows a top view of the system of Fig. 1;
Fig. 3A shows a side view of a first robotic bin-handling vehicle suitable for use in the system of Fig. 1;
Fig. 3B shows a side view of a second robotic bin-handling vehicle suitable for use in the system of Fig. 1;
Fig. 3C is a perspective side view of the robot of Fig. 3B;
Fig. 4 shows a computing device for implementing the operations described herein;
Fig. 5 shows a mobile system for inserting a storage bin into an automated storage and retrieval system;
Fig. 6 shows a mobile system for inserting a storage bin into an automated storage and retrieval system, comprising a shipping container, after deployment;
Fig. 7 shows a mobile system for inserting a storage bin into an automated storage and retrieval system, comprising a shipping container, before deployment;
Fig. 8 shows an automated storage and retrieval system comprising a storage grid and mobile system for inserting a storage bin into the grid; and
Fig. 9 is a flow diagram for a method of using an automated storage and retrieval system.

### DETAILED DESCRIPTION

In overview, the disclosure relates to a mobile system for inserting a storage bin into an automated storage and retrieval system. The mobile system is automated to insert bins. The mobile system may be readily transported to an automated storage and retrieval system to fill the system with storage bins or add more storage bins. Once the storage system has been filled with bins, the mobile system may be readily transported to another storage system where it is needed, thus speeding up and increasing the efficiency of bin insertion and storage system set up.

### Automated storage and retrieval system overview

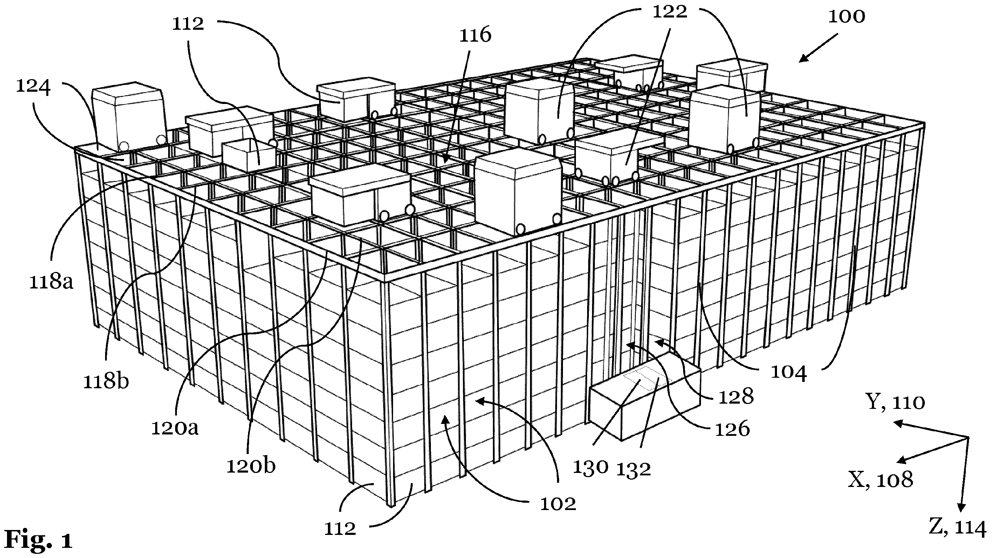

Referring to the example shown in Fig. 1, a grid 100 comprises a frame formed by a plurality of generally rectilinear, adjacent vertical columns 102 formed between vertical frame members 104 and extending in the X and Y directions 108, 110. The grid elements may be fabricated from any appropriate material; for example, the frame members may be formed of extruded aluminium. Storage bins 112 are stacked on top of each other, preferably in a self-supporting manner, in the Z direction 114 in the columns 102, forming a storage volume of storage cells for respective bins 112 extending in the X, Y and Z directions 108, 110, 114.

A rail system or network 116 is formed on top of the grid 100 and comprises pairs of vehicle rails or tracks 118a, 118b and 120a, 120b, respectively extending in the X and Y directions 108, 110. Robotic bin-handling vehicles, or robots, 122, which can be of a range of size, shape and function, are provided and configured to run on the rails 118, 120 and to transport bins 112 in both the X and Y directions 108, 110. The robots 122 are additionally configured to lift and lower bins 112 from/into the columns 102 in the Z direction 114, the bins 112 optionally being guided by the vertical frame members 104. The robots 122 access the bins 112 via access openings 124 above the columns 102 and formed between the rails 118, 120.

Some columns 102 may be used for alternative purposes than bin storage. For example, port columns 126, 128 comprise port or access columns allowing transfer of a bin 112 in and/or out of the grid 100. Port columns 126, 128 provide a vertical channel for lifting of a bin 112 from, or lowering of a bin 112 to, a port or ports 130, 132. The ports 130, 132 are shown in Fig. 1 at the lowest level of the grid, however ports can be located at any vertical position along the column. The respective port columns 126, 128 can be assigned for removing ('drop-off') and/or returning or delivering ('pick-up') bins 112 from/to the grid 100. The ports 130, 132 are therefore configured to allow bins 112 to be removed and reintroduced (horizontally) into the associated port column. As such, a port 130, 132 can comprise a conveyor (not shown in Fig. 1) onto which a bin 112 may be lowered and transported horizontally out of the port column. The port columns 126, 128 include an opening or access point through which bins 112 can enter and leave the column.

Bins 112 can be transported along the top of the grid 100 to and/or from a port column 126, 128 by robots 122, and from a port 130, 132 to a location outside the grid 100, which may be an access station (not shown) for processing of the bin 112 or its contents, such as a picking station for adding content to, or removing content from, the bin 112. In alternative examples (not shown), the bin 112 may be transported to a port of another grid on the same or another level, or to an external facility. Transport of bins 112 to and from ports 130, 132 may be by any appropriate means (not shown) including conveyors, transport vehicles, lifts or robots.

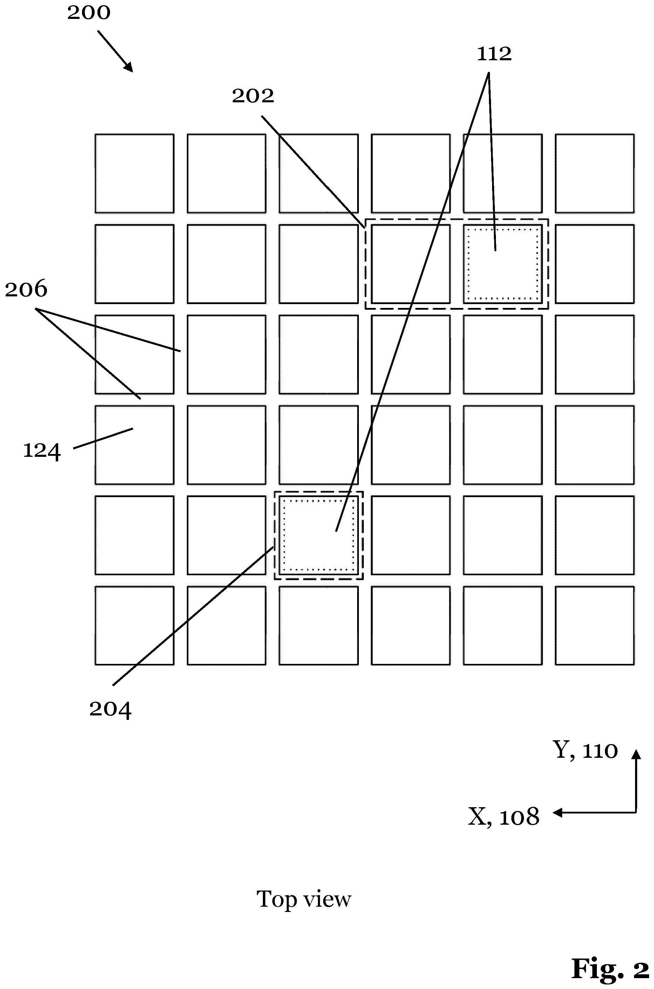

Referring to the example shown in Fig. 2, the X-Y configuration 200 of the rail system 116 can be seen in more detail, together with robots 202, 204 of different types. The rail system includes rails 206 defining between them vertical column access openings 124 for access to bins 112. The rails 206 can be any appropriate type for permitting travel of the robots 202, 204 in the X and Y directions 108, 110 thereon, including (not shown) groove-type rails for receiving vehicle wheels, or protrusion-type rails for engaging wheel recesses. Each rail 206 may comprise a single track or multiple parallel tracks in each of the X and Y directions 108, 110.

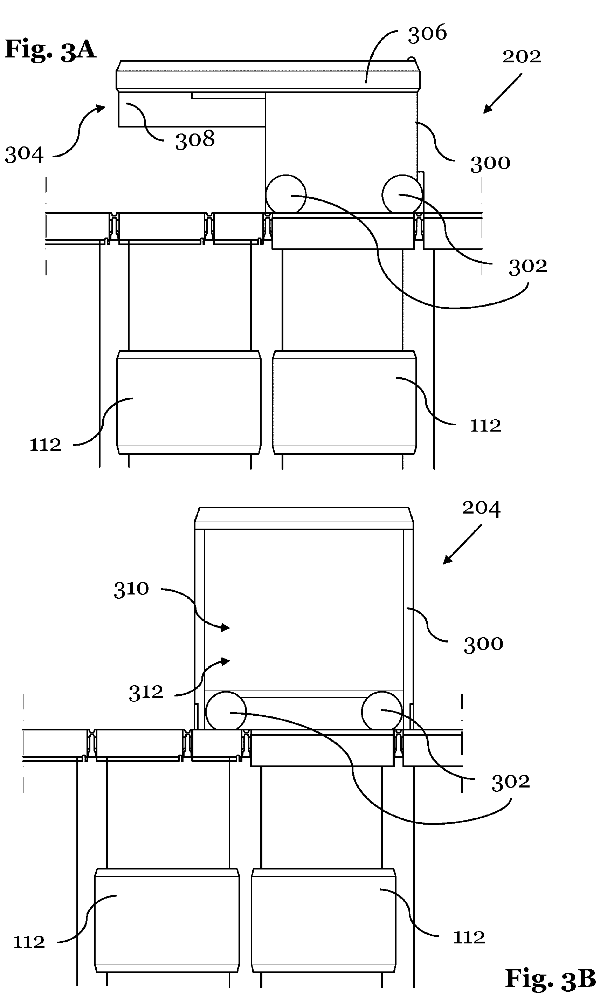

A first, 'cantilever' type of robot 202 is shown in more detail in Fig. 3A and includes a body 300, a set of wheels 302 and a lifting device 304. The body 300 contains operational equipment (not shown) for the robot 202 including drive, power and control systems. The wheels 302 permit movement of the robot 202 in one of the X and Y directions, an additional set of wheels (not visible in this view) permitting movement in the other of the X and Y directions, in both cases along the respective rails or tracks 206. One or both sets of wheels can be raised or lowered to permit selective engagement of the rails for movement in the desired direction. The lifting device 304 includes a cantilever element 306 extending in the X-Y plane from the top of the body 300, and a gripping device 308, which is raisable and lowerable from the cantilever element 306. The gripping device 308 is configured to grip or engage a bin 112; for example, by gripping a part of the bin 112, or by passively or actively engaging a suitably configured part of the bin 112.

A second, 'internal cavity' type of robot 204 is shown in more detail in Fig. 3B and includes, as an alternative to the cantilevered lifting system, an internal cavity 310 within the body 300 and in which the lifting device 312 including a gripping device (not shown) is located. In this case, the body 300 includes the robot's operational equipment and a storage space for one or more bins 112, for use, for example, while transporting the bin 112.

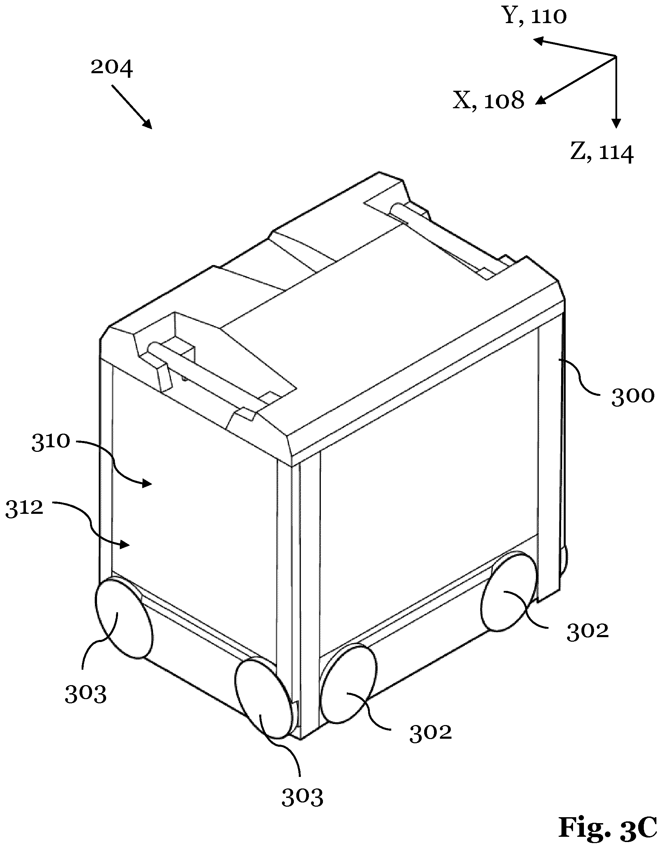

Fig. 3C shows a perspective side view of the robot of Fig. 3B in which the first set of wheels 302 from Fig. 3B is visible. The additional set of wheels referenced above but not shown in Fig. 3B is shown as wheels 303 in Fig. 3C. The additional set of wheels 303 is arranged perpendicular to the first set of wheels 302, to allow rolling of the robot 204 in the X and Y directions on the first and second set of wheels 302, 303 respectively. The first and second set of wheels 302, 303 shown in Fig. 3C may be configured to be independently lowered into engagement with the rails (and conversely raised out of engagement with the rails) to allow the robot 202 to move in the X and Y direction across the arrangement of rails shown in Fig. 2. Although the perspective view shown in Fig. 3C is of the robot 204 of Fig. 3B, it will be appreciated that a similar perpendicular wheel arrangement may be applied to the robot 202 of Fig. 3A.

### Control and monitoring system

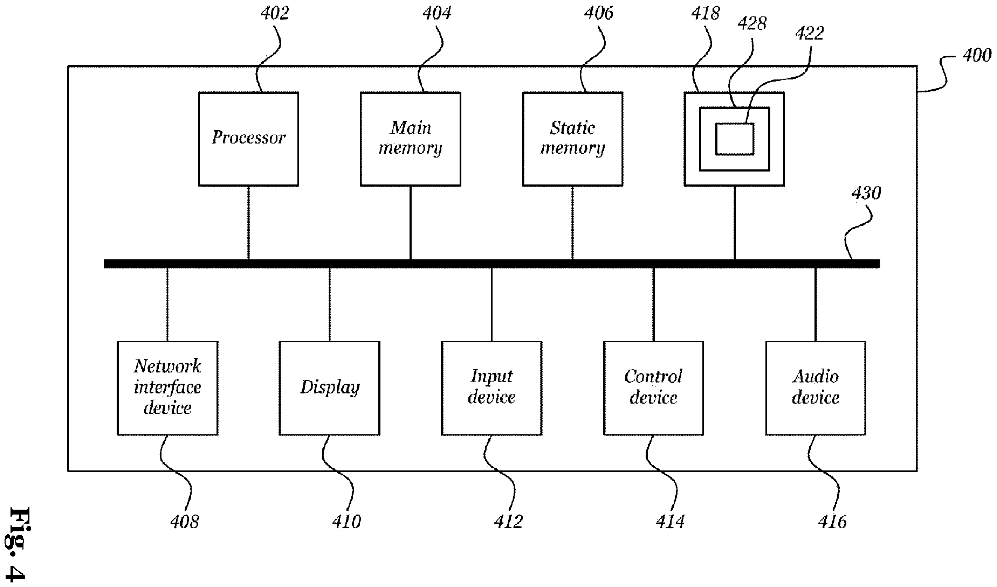

Control and monitoring of the automated storage and retrieval system, including monitoring and storing bin position and controlling bin delivery, retrieval and transport and robot routing and collision avoidance, is performed by a control system shown in Fig. 4 in communication with the robots and/or other controllable system components. Control can be performed locally or remotely and may be implemented by a processing system, for example in the form of a computing device. Accordingly, the methods described herein may form all or part of a computer-implemented method, or a system configured to perform the methods described herein.

With reference to Fig. 4, a processing system 400 suitable for controlling the automated storage and retrieval system described herein and carrying out the methods described herein will now be described. An analogous processing system may be provided for controlling the mobile system for inserting a storage bin into an automated storage and retrieval system described herein. Fig. 4 shows a block diagram of one implementation of a processing system 400 in the form of a computing device within which a set of instructions for causing the computing device to perform any one or more of the methods described herein may be executed. In some implementations, the computing device may be connected (e.g., networked) to other machines in a Local Area Network (LAN), an intranet, an extranet, or the Internet. The computing device may operate in the capacity of a server or a client machine in a client-server network environment, or as a peer machine in a peer-to-peer (or distributed) network environment. The computing device may be a personal computer (PC), a tablet computer, a set-top box (STB), a Personal Digital Assistant (PDA), a cellular telephone, a web appliance, a server, a network router, switch or bridge, or any machine capable of executing a set of instructions (sequential or otherwise) that specify actions to be taken by that machine. Further, while only a single computing device is illustrated, the term 'computing device' shall also be taken to include any collection of machines (e.g., computers) that individually or jointly execute a set (or multiple sets) of instructions to perform any one or more of the methods described herein.

The example processing system 400 includes a processor 402, a main memory 404 (e.g., read-only memory (ROM), flash memory, dynamic random-access memory (DRAM) such as synchronous DRAM (SDRAM) or Rambus DRAM (RDRAM), etc.), a static memory 406 (e.g., flash memory, static random-access memory (SRAM), etc.), and a secondary memory (e.g., a data storage device 418), which communicate with each other via a bus 430.

Processor 402 represents one or more general-purpose processors such as a microprocessor, central processing unit, or the like. More particularly, the processor 402 may be a complex instruction set computing (CISC) microprocessor, reduced instruction set computing (RISC) microprocessor, very long instruction word (VLIW) microprocessor, processor implementing other instruction sets, or processors implementing a combination of instruction sets. Processor 402 may also be one or more special-purpose processors such as an application specific integrated circuit (ASIC), a field programmable gate array (FPGA), a digital signal processor (DSP), network processor, or the like. Processor 402 is configured to execute the processing logic (instructions 422) for performing the operations and steps described herein.

The processing system 400 may further include a network interface device 408. The processing system 400 also may include any of a video display unit 410 (e.g., a liquid crystal display (LCD) or a cathode ray tube (CRT)), an alphanumeric input device 412 (e.g., a keyboard or touchscreen), a cursor control device 414 (e.g., a mouse or touchscreen), and an audio device 416 (e.g., a speaker).

It will be apparent that some features of the processing system 400 shown in Fig. 4 may be absent. For example, the processing system 400 may have no need for display device 410 (or any associated adapters). This may be the case, for example, for particular server-side computer apparatuses which are used only for their processing capabilities and do not need to display information to users. Similarly, user input device 412 may not be required. In its simplest form, processing system 400 comprises processor 402 and main memory 404.

The data storage device 418 may include one or more machine-readable storage media (or more specifically one or more non-transitory computer-readable storage media) 428 on which is stored one or more sets of instructions 422 embodying any one or more of the methods or functions described herein. The instructions 422 may also reside, completely or at least partially, within the main memory 404 and/or within the processor 402 during execution thereof by the processing system 400, the main memory 404 and the processor 402 also constituting computer-readable storage media 428.

The various methods described herein may be implemented by a computer program. The computer program may include computer code arranged to instruct a computer to perform the functions of one or more of the various methods described herein. The computer program and/or the code for performing such methods may be provided to an apparatus, such as a computer, on one or more computer-readable media or, more generally, a computer program product. The computer-readable media may be transitory or non-transitory. The one or more computer-readable media could be, for example, an electronic, magnetic, optical, electromagnetic, infrared, or semiconductor system, or a propagation medium for data transmission, for example for downloading the code over the Internet. Alternatively, the one or more computer-readable media could take the form of one or more physical computer-readable media such as semiconductor or solid-state memory, magnetic tape, a removable computer diskette, a random-access memory (RAM), a read-only memory (ROM), a rigid magnetic disc, or an optical disk, such as a CD-ROM, CD-R/W or DVD.

The computer program is executable by the processor 402 to perform functions of the systems and methods described herein.

In an implementation, the modules, components, and other features described herein can be implemented as discrete components or integrated in the functionality of hardware components such as ASICS, FPGAs, DSPs, or similar devices.

A 'hardware component' is a tangible (e.g., non-transitory) physical component (e.g., a set of one or more processors) capable of performing certain operations and may be configured or arranged in a certain physical manner. A hardware component may include dedicated circuitry or logic that is permanently configured to perform certain operations. A hardware component may be or include a special-purpose processor, such as a field programmable gate array (FPGA) or an ASIC. A hardware component may also include programmable logic or circuitry that is temporarily configured by software to perform certain operations.

Accordingly, the phrase 'hardware component' should be understood to encompass a tangible entity that may be physically constructed, permanently configured (e.g., hardwired), or temporarily configured (e.g., programmed) to operate in a certain manner or to perform certain operations described herein.

In addition, the modules and components can be implemented as firmware or functional circuitry within hardware devices. Further, the modules and components can be implemented in any combination of hardware devices and software components, or only in software (e.g., code stored or otherwise embodied in a machine-readable medium or in a transmission medium).

### Operation of the automated storage and retrieval system

In operation, each bin 112 is given a unique identifier, which may be marked on the bin 112 using a computer-readable identifier (e.g., a barcode, quick-response code or radio-frequency identification tag) to ease identification of the bin 112. A database of the processing system 400 stores, in association with the unique identifier, the position and, optionally, content of each bin 112. When a bin 112 is moved (e.g., when it is retrieved from the grid 100), the database is updated to record its change in position.

When it is desired to retrieve a bin 112 from the grid 100, under control of the processing system 400, a robot 202, 204 is routed via the rail system 116 to the vertical column 102 including the storage cell where, according to the database, the bin 112 is positioned, and the lifting device 304, 312 is positioned (according to robot type) over the corresponding access opening 124, either adjacent or below the robot 202, 204. The robot 202, 204 lowers the gripping device 308 which engages, grips and lifts the bin 112 to the robot 202, 204. The robot 202, 204 then transports the bin 112, for example, to the drop-off port column 126, 128 for delivery to the port 130, 132 and subsequent processing external to the grid 100. In the event that the target or designated bin 112 is below other bins in the stack then the robot 202, 204 or multiple robots, which may be dedicated to the task, are controlled in a 'digging' operation to sequentially lift and reposition, temporarily or permanently, bins above the target bin 112 in order for it to be retrieved. It will be appreciated that other operations in relation to the bin 112 can be carried out in a similar manner. For example, a bin 112 can be delivered for storage in the grid 100 at the port 130, 132 of the pick-up port column 126, 128, gripped and lifted by a robot 202, 204 and delivered to the desired storage cell, bins above the desired position being repositioned if necessary as discussed above.

### Description of specific improvements

The specific improvements of the present disclosure will now be described in general terms before implementations of the disclosure are described by way of example with reference to the drawings. The word "may" is used to refer to a feature that is optional, i.e. in some implementations of the disclosure, the feature is present, and in some implementations of the disclosure, the feature is not present.

In a first aspect of the present disclosure, a mobile system for inserting a storage bin into an automated storage and retrieval system comprises a mobile platform; a storage bin input stage; a storage bin output stage; and a robotic arm for transferring a storage bin from the storage bin input stage to the storage bin output stage. At least one of the storage bin input stage, storage bin output stage and robotic arm is on the mobile platform. The storage bin output stage may be configured to insert a storage bin into the automated storage and retrieval system. For example, it may be configured to insert a storage bin into a cell of a grid of the automated storage and retrieval system via a port. The robotic arm may comprise a means for detecting a storage bin, such as a camera or LIDAR or other form of computer vision, and/or may comprise a picking means for picking up or moving a storage bin, such as a gripping means.

The storage bin input stage may comprise an input stage conveyer configured to transfer a storage bin from the storage bin input stage to the robotic arm. For example, the input stage conveyer may be configured to transfer a storage bin from a first position on the storage bin input stage to a second position on the storage bin input stage adjacent the robotic arm. The storage bin input stage may be configured to receive a pallet comprising a plurality of storage bins. The system may further comprise a pallet output stage for ejecting a pallet from the storage bin input stage, such as from the input stage conveyer. For example, a pallet may be ejected by the robotic arm via the pallet output stage. The storage bin input stage may be configured to accept a first pallet, transport the first pallet to a position adjacent to the robotic arm and then have space to accept a second pallet. Thus, while the robotic arm removes storage bins from the first pallet, a second pallet can be loaded onto the input stage conveyer, saving time.

The mobile system may further comprise a screening table (also known as a storage bin receiving table or buffer table) configured to receive a storage bin from the robotic arm. The screening table may comprise a screening table conveyer configured to transfer a storage bin from the screening table to the storage bin output stage (directly or indirectly). The screening table may be adapted to receive multiple storage bins to manage or facilitate flow of storage bins through the system, for example while storage bins are being scanned or labelled.

The mobile system may further comprise a rotating table configured to rotate a storage bin. The rotating table may be configured to receive a storage bin from the screening table and transfer a storage bin to the storage bin output stage. The rotating table may be able to rotate the bin any number of degrees using a rotating means. The rotating table may comprise wheels or a conveyer on the rotating table for moving a bin onto and off the rotating table. The screening table conveyer may transfer a storage bin from the screening table to the rotating table. The rotating table may be configured to transfer a storage bin to the storage bin output stage (directly or indirectly).

The screening table may comprise a storage bin labelling means and/or scanning means. The rotating table may comprise a storage bin labelling means and/or scanning means. Labelling means may comprise automated storage bin preparation devices for performing tasks related to preparing a storage bin for insertion into a storage system. For example, a labelling means may be configured to attach an identification label to a storage bin, print an identification label on a storage bin or etch an identification label into a storage bin, which can be done using a laser, for example. An identification label may be the "unique identifier" described above. A scanning means may comprise one or more of a scanner, a camera or LIDAR. The rotating means of the rotating table enables the use of a fixed vision system to measure the bin from multiple directions. Screening and labelling can be done at the rotating table and/or the screening table. Since labelling is preferably done on multiple sides of a storage bin, it is advantageous to do it on the rotating table.

The storage bin output stage may comprise a pushing means or translation means (such as wheels or a conveyor) for pushing a storage bin. Alternatively or additionally, the storage bin output stage may comprise a tilting means, optionally including rollers, for tilting a storage bin. When a storage bin is ready to enter the grid it is transported to the output stage. Here it can either be moved into the storage grid by means of wheels or a conveyor or the like, or by tilting the output stage creating a slope which the storage bin can roll down and into the storage grid. It may enter via a storage grid port and can then be collected by a robot. Thus, the pushing means may be configured to push a storage bin off the storage bin output stage, for example into a (cell of a) grid of an automated storage and retrieval system. The storage bin output stage may have a plurality of positions from which bins can be inserted into the grid to increase the rate at which bins can be inserted into the grid.

The mobile system may further comprise a shipping container, wherein the mobile platform is the base of the shipping container, wherein the storage bin input stage, the storage bin output stage and the robotic arm are mountable inside the shipping container. The shipping container may be a standard 20 foot (approximately 6.1 m) shipping container. A side of the container may open or may be removable. The storage bin input stage and/or the robotic arm may be deployable from the side of the container. The side may open hydraulically. The storage bin input stage may be connected to the shipping container via a hinge and may be configured to rotate about the hinge between a first configuration inside the shipping container and a second configuration outside the shipping container. The robotic arm may be mounted on a sliding mechanism configured to slide between a first configuration in which the robotic arm is inside the shipping container and a second configuration in which the robotic arm is outside the shipping container. The sliding mechanism may be foldable such that it can be folded inside the shipping container. There may be one or more openings or windows in a side of the shipping container through which a storage bin may be output from the storage bin output stage. One or more of the storage bin output stage, screening table and rotating table may be fixed inside the container. One or more of the storage bin output stage, screening table and rotating table may only be accessible when one or more of the robotic arm and input stage have been deployed and are, at least partially, outside the container.

The mobile system may further comprise a protective fence, for example surrounding the storage bin input stage and/or the robotic arm to prevent access to the storage bin input stage and/or the robotic arm for improved safety. The protective fence may be a mute or laser fence.

The mobile system may be configured to track the position of a storage bin using computer vision using one or more cameras configured to monitor the components of the mobile system. Additionally or alternatively, the mobile system may be configured to track the position of a storage bin by tracking the downward force on the storage bin input stage, screening table, rotating table and/or storage bin output stage, which can each be fitted with a weighing means for this purpose. The mobile system may further comprise a control system for controlling the various components of the mobile system, such as the processing system shown in Fig. 4.

In a second aspect of the present disclosure, an automated storage and retrieval system comprises a storage grid defined by one or more vertical columns defining a plurality of cells; an input port in a side of the storage grid configured to provide access to the plurality of cells; and the mobile system disclosed above. The mobile system is configured to insert a storage bin into the storage grid via the input port. The input port may be aligned with the storage bin output stage of the mobile system for inserting storage bins. The storage grid may have a plurality of input ports each corresponding to one of a plurality of positions of the mobile system output stage from which bins can be inserted into the grid.

The automated storage and retrieval system may further comprise a robotic vehicle, such as shown in Fig. 3A, Fig. 3B or Fig. 3C, arranged to traverse the storage grid and move the storage bin in and out of the storage grid. A storage bin may be configured to fit in a cell of the plurality of cells of the storage grid.

The automated storage and retrieval system may be configured to track the position of a storage bin using computer vision using one or more cameras configured to monitor the components of the mobile system. Additionally or alternatively, the automated storage and retrieval system may be configured to track the position of a storage bin by tracking the downward force on the storage bin input stage, screening table, rotating table and/or storage bin output stage, which can each be fitted with a weighing means for this purpose. The automated storage and retrieval system may further comprise a control system for controlling the various components of the automated storage and retrieval system, such as the processing system shown in Fig. 4.

In a third aspect of the present disclosure, a method of using the automated storage and retrieval system disclosed above comprises placing a storage bin on the storage bin input stage; transferring the storage bin to the storage bin output stage using the robotic arm; and inserting the storage bin into the storage grid using the storage bin output stage. The storage bin may be indirectly transferred by the robotic arm to the storage bin output stage, for example via a screening table and/or rotating table. Placing a storage bin on the storage bin input stage may comprise placing a pallet comprising a plurality of storage bins on the storage bin input stage. Accordingly, the method may further comprise ejecting a pallet from a pallet output stage.

Transferring the storage bin to the storage bin output stage may comprise transferring the storage bin to a screening table and/or a rotating table. Transferring the storage bin to the storage bin output stage may comprise transferring the storage bin from a screening table to a rotating table. Transferring the storage bin to the storage bin output stage may comprise transferring the storage bin from a screening table or a rotating table to the storage bin output stage.

The method may further comprise scanning and/or labelling the storage bin on a screening table or a rotating table. The method may further comprise setting up a fence around the storage bin input stage and/or the robotic arm. The method may further comprise connecting the container's control system to a control system for the grid.

Each possible combination of any of the above-described features forms part of the present disclosure. A plurality of instances of any feature may also be present. By way of example, implementations of the disclosure will now be described with reference to the drawings. Each possible combination of any features described below with any features described above also forms part of the disclosure.

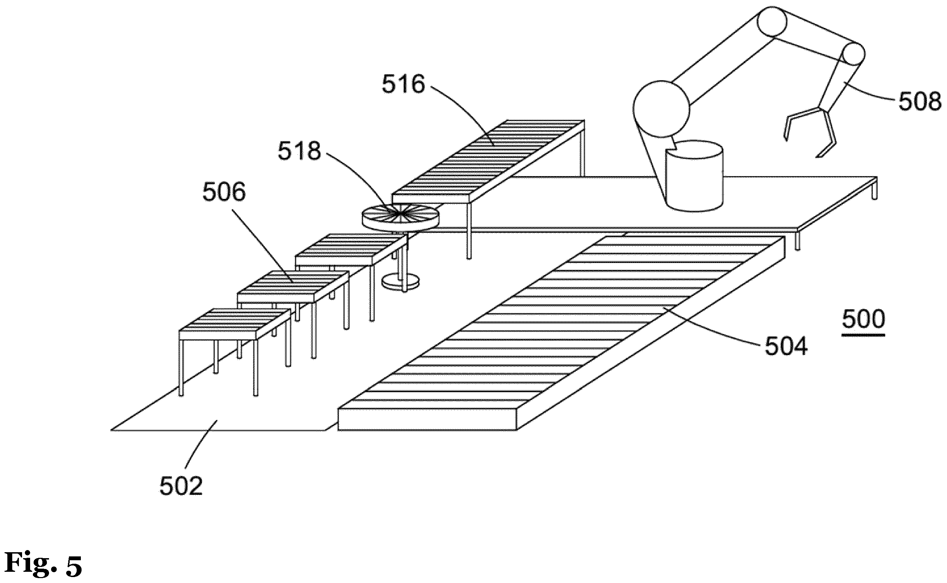

In the first aspect of the present disclosure, with reference Fig. 5, a mobile system 500 for inserting a storage bin 112 into an automated storage and retrieval system (such at that illustrated in Figs. 1 and 2) comprises a mobile platform 502; a storage bin input stage 504; a storage bin output stage 506; and a robotic arm 508 for transferring a storage bin from the storage bin input stage 504 to the storage bin output stage 506. The storage bin input stage 504 comprises an input stage conveyer configured to transfer a storage bin 112 from the storage bin input stage 504 to the robotic arm 508 i.e. to a position adjacent to the robotic arm 508 where the robotic arm 508 can reach the storage bin 112. The storage bin output stage 506 is on the mobile platform 502, while the storage bin input stage 504 and robotic arm 508 are deployed adjacent to the mobile platform 502. In other examples, the storage bin input stage 504 and/or robotic arm 508 may be on the mobile platform 502, in which case the storage bin output stage 506 may or may not be on the mobile platform 502. The storage bin output stage 506 is configured to insert a storage bin 112 into a cell of the automated storage and retrieval system. The robotic arm 508 comprises a camera with computer vision for detecting a storage bin 112, and a conventional gripping means for picking up a storage bin 112.

The mobile system 500 further comprise a screening table 516 (also known as a storage bin receiving table or buffer table), configured to receive a storage bin 112 from the robotic arm 508, and a rotating table 518 configured to receive and rotate a storage bin 112. In other examples, the screening table 516 is not present and a storage bin 112 can be placed directly on the rotating table 518 by the robotic arm 508. Indeed, in other examples, neither the screening table 516 nor the rotating table 518 are present and a storage bin 112 can be placed directly on the storage bin output stage 506 by the robotic arm 508. The screening table 516 comprises a screening table conveyer configured to transfer a storage bin 112 from the screening table 516 to the storage bin output stage 506 via the rotating table 518. The rotating table 518 is configured to receive a storage bin 112 from the screening table 516 and transfer a storage bin to the storage bin output stage 506. The rotating table 518 is able to rotate a storage bin 112 by any number of degrees using a motorised rotating means (not shown). The rotating table 518 further comprises motorised wheels (not shown) on the rotating table 518 for moving a storage bin 112 onto and off the rotating table 518.

As a storage bin 112 is transported along the components of the mobile system 500, it encounters one or more automated bin-preparation devices for performing tasks related to preparing a storage bin 112 for insertion into a storage system. As such, the rotating table 518 comprises a scanning means (not shown) and a storage bin labelling means (not shown). The scanning means and labelling means perform tasks related to preparing a storage bin for insertion into a storage system. In detail, the labelling means etches an identification label into the storage bin 112 using a laser (not shown). Alternatively or additionally, the labelling means may be configured to attach an identification label to a storage bin 112 or print an identification label on a storage bin 112. The scanning means comprises a camera to measure the bin 112 (a dimension scanning device). The rotating means of the rotating table 518 enables the use of a fixed vision system to measure the bin from multiple directions. The scanning means is used to measure the physical dimensions of the storage bin 112 in order to confirm that the size of the storage bin 112 is within predefined tolerances prior to insertion into a storage system. In other examples, scanning and labelling can be done at the screening table 516. Since labelling is ideally done on multiple sides of a storage bin, it is beneficial to do it on the rotating table 518. The storage bin preparation devices can be mounted in or on the rotating table 518 or screening table 516, however, such devices could also be supported above or to the sides of the rotating table 518 or screening table 516.

The identification label, which may comprise a barcode, quick-response code, radio-frequency identification tag or other machine readable code, comprises identification information for the storage bin 112. The labelling means can automatically transmit the information regarding the label to a control system, such as a control system of the mobile system 500 or a control system of a storage and retrieval system. In addition, or alternatively, the storage bin output stage 506 may comprise an ID scanner arranged to scan a label and transmit the identification information to a control system. Such an ID scanner may scan the label affixed by the labelling device, or could be used in the situation where storage bins 112 have pre-affixed identification labels.

When a storage bin 112 is ready to enter the automated storage and retrieval system, it is transported to the storage bin output stage 506. The storage bin output stage 506 comprises first, second and third sub-stages 506a, 506b, 506c each comprising a tilting means (not shown) for tilting a storage bin 112 when positioned on the respective stage. Motorised conveyors on each sub-stage 506a, 506b, 506c can transfer a storage bin 112 onto and between the sub-stages 506a, 506b, 506c. Once a storage bin 112 is in position, as determined by a camera and computer vision, the tilting mechanism raises a side of the respective sub-stage 506a, 506b, 506c causing the storage bin 112 to slide down the stage where it can be received in a storage system, as discussed in further detail below. In other examples, the storage bin output stage 506 comprises a different number of stages sub-506a, 506b, 506c (such as one, two or four sub-stages). In other examples, each sub-stage 506a, 506b, 506c comprises a pushing means (such as wheels or a conveyor) for pushing a storage bin 112 laterally out of the mobile system 500.

The mobile system 500 further comprise a control system (not shown) for controlling the various components of the mobile system 500.

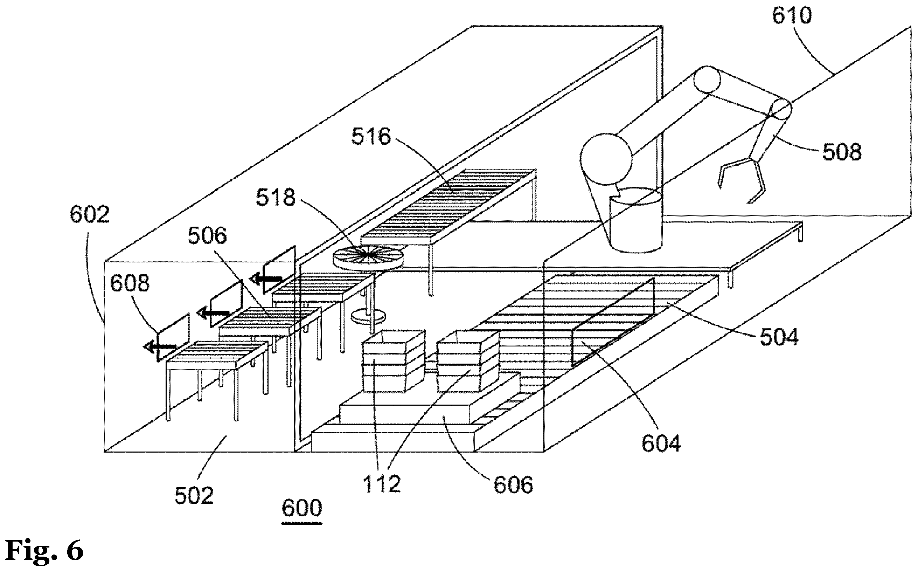

As illustrated in related mobile system 600 in Fig. 6, which is similar to the mobile system 500 in Fig. 5 except where indicated, the mobile system 600 comprises a shipping container 602, wherein the mobile platform 502 is the base of the shipping container 602. The storage bin input stage 504, the storage bin output stage 506, the robotic arm 508, the screening table 516 and the rotating table 518 are mountable inside the shipping container 602. A side of the container adjacent to the storage bin input stage 504 and the robotic arm 508 is removable (and has been removed in the example shown in Fig. 6). In some examples, the side opens (for example, hydraulically) and storage bin input stage 504 and robotic arm 508 can be deployed onto the side of the container 602 after opening. In the present example, the shipping container 602 is a standard 20 foot (approximately 6.1 m) shipping container, although other sizes can of course be used.

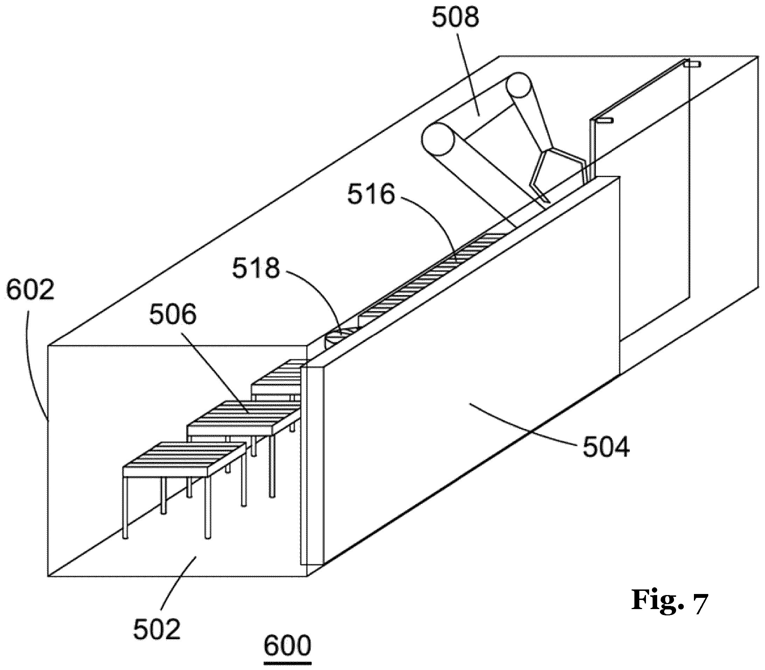

The storage bin input stage 504 is connected to the mobile platform 502 (i.e. the base of the shipping container 602) via a hinge (not shown) and is configured to rotate about the hinge between a first configuration inside the shipping container 602 and a second configuration outside the shipping container 602. The robotic arm 508 is mounted on a sliding mechanism (not shown) and is configured to slide between a first configuration in which the robotic arm 508 is inside the shipping container 602 and a second configuration in which the robotic arm 508 is outside the shipping container 602. The sliding mechanism is foldable such that it can be folded inside the shipping container 602 when the robotic arm 508 is in the first configuration. Fig. 7 shows the mobile system 600 in a closed configuration with the storage bin input stage 504 and robotic arm 508 inside. Returning to Fig. 6, there is a plurality of openable windows 608 in a side of the shipping container 602 through which a storage bin 112 may be output via the storage bin output stage 506. The storage bin output stage 506, screening table 516 and rotating table 518 are fixed inside the container 602. The storage bin output stage 506, screening table 516 and rotating table 518 become accessible when the robotic arm 508 and input stage 504 have been deployed outside of the container 602, although this is not necessarily the case in other examples.

As illustrated in the example in Fig. 6, the storage bin input stage 504 is configured to receive a pallet 606 comprising a plurality of storage bins 112. The system 600 further comprises a pallet output stage 604 for ejecting a pallet 606 from the input stage 504 conveyer. Specifically, a pallet 606 can be ejected by the robotic arm 508, although the storage bin input stage 504 could alternatively be provided with dedicated means such as motorised wheels for ejecting a pallet 606. The storage bin input stage 504 is configured to accept a first pallet 606, transport the first pallet 606 to a position adjacent to the robotic arm 508 and then have space to accept a second pallet (not shown). Thus, while the robotic arm 508 removes storage bins 112 from the first pallet 606, a second pallet can be loaded onto the input stage conveyer, improving time efficiency.

The mobile system 600 in Fig. 6 further comprises a protective fence 610 surrounding the storage bin input stage 504 and the robotic arm 508 to prevent access to the storage bin input stage 504 and the robotic arm 508 during use for added safety. In some example, the protective fence 610 may be a mute or laser fence that can shut off the mobile system 600. The protective fence can be stored inside the shipping container 602 and can be provided separately when the system 600 is set up.

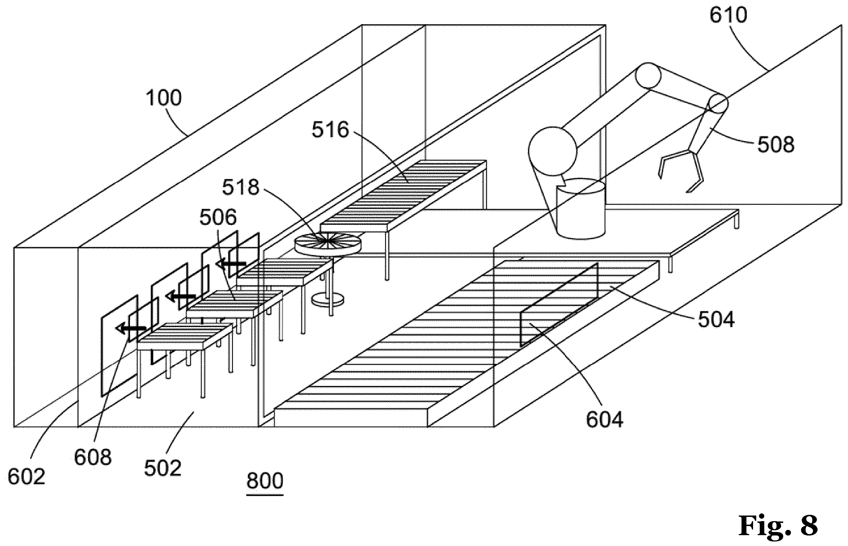

In the second aspect of the present disclosure, with reference to Fig. 8, an automated storage and retrieval system 800 comprises a storage grid 100 defined by one or more vertical columns 102 defining a plurality of cells; an input port 130 in a side of the storage grid 100 configured to provide access to the plurality of cells; and the mobile system 600 disclosed above. Storage bins 112 are each configured to fit in a cell of the plurality of cells. The mobile system 600 is configured to insert a storage bin 112 into the storage grid 100 via the input port 130. As such, the input port 130 is aligned with the storage bin output stage 506 of the mobile system 600 for inserting storage bins. The storage grid 100 has three input ports 130 each corresponding to one of the windows 608 of the mobile system output stage 506 through which bins 112 can be inserted into the grid 100. Each port 130 can comprise a conveyor as described above with reference to Fig. 1, or can simply be an opening in the grid 100, as illustrated in Fig. 8. In other examples, the automated storage and retrieval system 800 comprises a different number of ports 130 and windows 608.

The automated storage and retrieval system 800 further comprises a robotic bin-handling vehicle 122 (not shown) arranged to traverse the storage grid 100 and move a storage bin 112 in and out of the top of the storage grid 100. Once a storage bin 112 enters via a storage grid port 130, it can then be collected by the robotic bin-handling vehicle 122. Once the storage bin 112 insertion operation is completed, the mobile system 600 may be removed, and the storage system made available for normal operation.

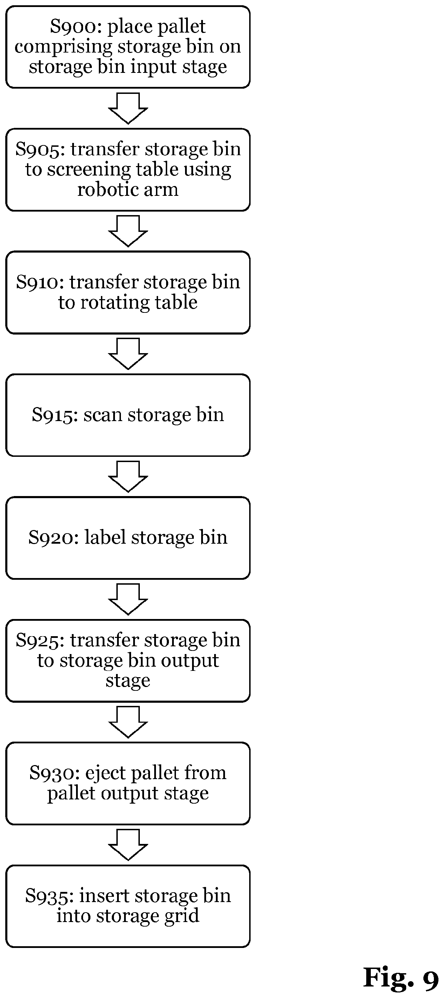

In the third aspect of the present disclosure, with reference to the flow diagram of Fig. 9, a method of using the automated storage and retrieval system 800 disclosed above comprises placing S900 a pallet 606 comprising a storage bin 112 on the storage bin input stage 504. The method further comprises transferring S905 the storage bin 112 to the screening table 516 using the robotic arm 508; transferring S910 the storage bin 112 to the rotating table 518; scanning S915 the storage bin 112 to measure the physical dimensions of the storage bin 112 in order to confirm that the size of the storage bin 112 is within predefined tolerances prior to insertion into the grid 100; labelling S920 the storage bin 112 by etching an identification label into the storage bin 112; transferring S925 the storage bin 112 to the storage bin output stage 516; ejecting S930 the pallet 606 from the pallet output stage 604; and inserting S935 the storage bin 112 into the storage grid 100 using the storage bin output stage 506. As is to be understood, the pallet 606 will typically comprise a plurality of storage bins 112 which will be removed from the pallet 606 by the robotic arm 508 and subsequently inserted into the storage grid 100. Once all of the storage bins 112 have been removed from the pallet 606, the pallet can then be ejected S930.

Transfer of a storage bin 112 between the screening table 516 and the rotating table 518, and between the rotating table 518 and the storage bin output stage 516 is typically performed by means such as a conveyer or motorised wheels on the screening table 516, rotating table 518 and storage bin output stage 516, but could also be performed by the robotic arm 508. Inserting S935 the storage bin 112 into the storage grid 100 using the storage bin output stage 506 can be performed by tilting part of the storage bin output stage 506 as described above, or using a conveyer or motorised wheels that are part of the storage bin output stage 506. The method comprises tracking the position of the storage bin 112 using computer vision to coordinate operations. Alternatively, the method comprises tracking the downward force on the storage bin input stage 504, screening table 516, rotating table 518 and storage bin output stage 516 to keep track of the location of the storage bin 112. In this instance, each component is fitted with a weighing means for this purpose.

In other examples, the method does not include one or more of scanning S915 or labelling S920. In other examples, storage bins 112 can be passed directly from the input stage 504 to the output stage 506 by the robotic arm 508. In other examples, a pallet 606 and pallet ejection step S930 are not needed, for example if storage containers are individually placed on the storage bin input stage 504.

It is to be understood that the above description is intended to be illustrative, and not restrictive. Many other implementations will be apparent to those of skill in the art upon reading and understanding the above description. Although the present disclosure has been described with reference to specific example implementations, it will be recognized that the disclosure is not limited to the implementations described, but can be practiced with modification and alteration within the spirit and scope of the appended claims. Accordingly, the specification and drawings are to be regarded in an illustrative sense rather than a restrictive sense. The scope of the disclosure should, therefore, be determined with reference to the appended claims, along with the full scope of equivalents to which such claims are entitled.

## Claims

1. A mobile system for inserting a storage bin into an automated storage and retrieval system, the mobile system comprising:
a mobile platform;
a storage bin input stage;
a storage bin output stage; and
a robotic arm for transferring a storage bin from the storage bin input stage to the storage bin output stage,
wherein at least one of the storage bin input stage, storage bin output stage and robotic arm is on the mobile platform.

2. A mobile system according to claim 1, wherein the storage bin input stage comprises an input stage conveyer configured to transfer a storage bin from the storage bin input stage to the robotic arm.

3. A mobile system according to claim 1 or 2, wherein the storage bin input stage is configured to receive a pallet comprising a plurality of storage bins.

4. A mobile system according to claim 3 when dependent on claim 2, further comprising a pallet output stage for ejecting a pallet from the input stage conveyer.

5. A mobile system according to any preceding claim, further comprising a screening table configured to receive a storage bin from the robotic arm.

6. A mobile system according to claim 5, wherein the screening table comprises a screening table conveyer configured to transfer a storage bin from the screening table to the storage bin output stage.

7. A mobile system according to any preceding claim, further comprising a rotating table configured to rotate a storage bin.

8. A mobile system according to claim 7 when dependent on claim 5 or 6, wherein the rotating table is configured to transfer a storage bin to the storage bin output stage.

9. A mobile system according to any of claims 5 to 8, wherein the screening table or rotating table comprises a storage bin labelling means.

10. A mobile system according to any preceding claim, wherein the storage bin output stage comprises a pushing means/conveyor for pushing a storage bin.

11. A mobile system according to any preceding claim, further comprising a shipping container, wherein the mobile platform is the base of the shipping container, wherein the storage bin input stage, the storage bin output stage and the robotic arm are mountable inside the shipping container.

12. A mobile system according to claim 11, wherein the storage bin input stage is connected to the shipping container via a hinge and is configured to rotate about the hinge between a first configuration inside the shipping container and a second configuration outside the shipping container.

13. A mobile system according to claim 11 or 12, wherein the robotic arm is mounted on a sliding mechanism configured to slide between a first configuration in which the robotic arm is inside the shipping container and a second configuration in which the robotic arm is outside the shipping container.

14. An automated storage and retrieval system comprising:
a storage grid defined by one or more vertical columns defining a plurality of cells;
an input port in a side of the storage grid configured to provide access to the plurality of cells; and
the mobile system of any preceding claim,
wherein the mobile system is configured to insert a storage bin into the storage grid via the input port.

15. A method of using the automated storage and retrieval system of claim 14, the method comprising:
placing a storage bin on the storage bin input stage;
transferring the storage bin to the storage bin output stage using the robotic arm; and
inserting the storage bin into the storage grid using the storage bin output stage.
